# EUROPÄISCHE PATENTSCHRIFT

(11) **EP 3 781 801 B1**
(45) Veröffentlichungstag und Bekanntmachung des Hinweises auf die Patenterteilung: **18.10.2023**
(21) Anmeldenummer: 19718672.9
(22) Anmeldetag: 16.04.2019
(51) Int. Cl.: F02B 77/11, B29C 37/00, B29C 44/00, B60R 13/08

(54) **ABDECKUNG, INSBESONDERE FÜR DEN MOTOR EINES KRAFTFAHRZEUGS**
COVER, PARTICULARLY FOR THE ENGINE OF A MOTOR VEHICLE
ÉLÉMENT DE RECOUVREMENT, NOTAMMENT POUR LE MOTEUR D'UN VÉHICULE AUTOMOBILE

(30) Priorität: 17.04.2018 DE 102018109066
(43) Veröffentlichungstag der Anmeldung: 24.02.2021
(73) Patentinhaber: Auria Solutions UK I Ltd., EC4M 7WS London (GB)
(72) Erfinder: SYMKENBERG, Gerrit, 30916 Isernhagen (DE); KLIWER, Carsten, 38110 Braunschweig (DE); GRUBE, Ulrich, 29352 Adelheidsdorf (DE); KLEIN, Uwe, 85622 Feldkirchen (DE)
(74) Vertreter: Liesegang, Eva
(86) Internationale Anmeldenummer: PCT/EP2019/059793
(87) Internationale Veröffentlichungsnummer: WO 2019/201912

(56) Entgegenhaltungen:
- EP-A1- 2 084 051
- WO-A1-2004/090307
- DE-A1- 10 314 220
- DE-A1-102005 013 829
- US-A1- 2015 075 482

## Beschreibung

### GEBIET

Die Erfindung betrifft eine Abdeckung, zum Beispiel eine Abdeckung für den Motor eines Kraftfahrzeuges, die einen Schaumstoffkörper aufweist.

### HINTERGRUND

Abdeckungen des Motors oder von Teilen des Motorraums von Kraftfahrzeugen werden z.B. zur Absorption des von dem Motor ausgehenden Schalls und zur Dämpfung von Vibrationen eingesetzt. Zusätzlich können Sie eine dekorative Funktion haben.

Es ist bekannt, Motorabdeckungen aus einem Kunststoffbauteil herzustellen, das an seiner Frontseite oder Sichtseite, die von dem Motorraum abgewandt ist, eine gestaltete Oberfläche aufweist, die beispielsweise lackiert oder beschichtet ist und häufig ein Logo der jeweiligen Kraftfahrzeugmarke trägt. Die Motorabdeckung kann von dem Motor entkoppelt an diesem befestigt werden, beispielsweise mittels Schrauben mit Hülse und Elastomerscheibe oder über einen Kugelkopf mit Elastomeraufnahme. Der Kugelkopf kann dabei an dem Motor oder an der Abdeckung angebracht werden und die Elastomeraufnahme wird jeweils an dem anderen der beiden angebracht.

Die Motorabdeckung kann ein Schall absorbierendes Bauteil aufweisen, beispielsweise einen Schaumstoffkörper, der mit der Abdeckung zum Beispiel verklebt oder verschweißt oder an diese angeschäumt ist. Der Schaumstoffkörper kann aus einem Schnittschaum oder einem Formschaum, beispielsweise aus Polyurethan als Hauptkomponente, hergestellt sein.

In der DE 10 2006 052 900 A1 ist eine Motorabdeckung beschrieben, die zur Verbesserung des Fußgängerschutzes auf ein hartes Kunststoffbauteil verzichtet und aus einem beschichteten Schaumstoffkörper mit eingebetteten Elementen zur Befestigung der Abdeckung an dem Motor besteht. Die US 2015/075482 A1, die WO 2004/090307 A1 und die DE 103 14 220 A1 beschreiben Schaumstoffkörper, in die jeweils eine Halterung zur Aufnahme eines Befestigungselementes eingebettet ist. Die DE 10 2005 013829 A1 beschreibt eine Motorabdeckung aus einem Schaumstoffkörper mit einer Durchgangsbohrung, in die ein Distanzstück eingesetzt ist, welches ein Bolzen zur Fixierung der Motorabdeckung aufnimmt.

Die Erfindung sieht ein Abdeckungssystem gemäß Anspruch 1 und ein Verfahren gemäß Anspruch 11 vor. Ausgestaltungen sind in den abhängigen Ansprüchen angegeben.

Die Abdeckung weist einen Schaumstoffkörper auf, der die Kontur der Abdeckung mit einer Frontseite und einer Rückseite definiert. In die Rückseite des Schaumstoffkörpers ist eine Aussparung eingeformt, die zur Aufnahme eines Befestigungselementes derart ausgestaltet ist, dass das Befestigungselement in der Aussparung in direktem Kontakt mit der Oberfläche des Schaumstoffkörpers zu liegen kommt. Dadurch kann die Aufnahme das Befestigungselement durch nur die Aussparung in dem Schaumstoffkörper gebildet sein, wobei für die Aufnahme des Befestigungselementes keine weitere Komponente an den Schaumstoffkörper angebracht oder angeformt werden müssen. In einigen Beispielen sind an der Rückseite des Schaumstoffkörpers insgesamt keine weiteren Komponenten angebracht oder angeformt. "Weitere Komponenten" sind insbesondere Komponenten, die nicht schon bei der Herstellung des Schaumstoffkörpers und aus dem Schaummaterial des Schaumstoffkörpers gebildet werden. Das Befestigungselement kann an einem Motor oder an einer anderen Fläche fixiert sein, mit dem/der die Abdeckung verbunden werden soll.

Die Erfindung schafft dadurch eine Abdeckung, beispielsweise eine Motorabdeckung, die im Vergleich zum Stand der Technik ein geringeres Gewicht hat und mit geringerem Aufwand hergestellt werden kann, weil bei der Formung der Abdeckung keine Befestigungselemente in ein Formwerkzeug eingelegt, positioniert und gehalten werden müssen. Dadurch verringert sich auch die Zykluszeit in der Herstellung, und die Materialkosten können gesenkt werden. Ferner hat die erfindungsgemäße Abdeckung den Vorteil, dass sie aus einem einzigen einheitlichen Schaumstoffkörper gebildet sein kann, der keine Durchbrüche an seiner Oberfläche aufweist. Dadurch ist die Abdeckung besser gegen Eindringen von Feuchtigkeit und Fremdstoffen geschützt. Auch im Hinblick auf ein mögliches Recycling der Abdeckung am Ende ihrer Lebenszeit ist es vorteilhaft, dass dies aus einem einheitlichen Schaumstoffkörper besteht, ohne Befestigungskomponenten aus anderen Materialien.

Der Schaumstoffkörper ist aus einem Integralschaum gebildet, dessen Dichte von außen nach innen abnimmt. Dabei weist der Schaumstoffkörper einen zelligen Kern und eine zu seinem Rand dichter werdende Außenhaut an seiner Frontseite und seiner Rückseite auf. Die Verwendung eines Integralschaums für den Schaumstoffkörper hat den Vorteil, dass dieser inhärent eine dichte, geschlossene Außenfläche bildet, die einerseits den Schaumstoffkörper gegen das Eindringen von Feuchtigkeit und sonstigen Fremdstoffen schützt und die andererseits eine stabile Oberfläche zur Ausbildung der Aufnahme für das Befestigungselement bereitstellt.

In einem Beispiel weist der Schaumstoffkörper eine mittlere Dichte im Bereich von 100 bis 500 g/dm³ auf. Ferner kann der Schaumstoffkörper eine Stauchhärte im Bereich von 30 bis 350 kPa aufweisen.

Die Stauchhärte ist ein Maß für die Festigkeit des Schaumstoffkörpers. Zur Ermittlung der Stauchhärte kann zum Beispiel ein quadratischer Prüfkörper (Parallelepiped) aus dem Schaumstoff zwischen zwei Platten zusammengedrückt und die Kraft gemessen werden, die notwendig ist, diesen Prüfkörper auf einen bestimmten Betrag seiner ursprünglichen Höhe (z. B. 40 %) zusammenzudrücken. Der Prüfkörper kann für die Ermittlung der Stauchhärte zum Beispiel die Abmessungen 100 mm × 100 mm × 50 mm aufweisen. Anschließend kann dieser Wert auf die geprüfte Fläche bezogen werden, und es ergibt sich die Stauchhärte oder der Kompressionswiderstand des Schaumstoffs in kPa.

In verschiedenen Beispielen kann die Frontseite des Schaumstoffkörpers eine Oberflächenschicht aufweisen, wie eine Tiefziehfolie, eine Sprühhaut, eine Gießhaut, eine Farbschicht, eine Lackschicht und/oder eine Dekorschicht, die die Frontseite des Schaumstoffkörpers vollständig oder teilweise abdeckt. Ferner kann ein Kunststoffformteil an der Frontseite des Schaumstoffkörpers angebracht oder angeformt sein. Dies ermöglicht die optische und funktionale Gestaltung der Oberfläche der Abdeckung.

Alternativ kann die Abdeckung nur aus dem Schaumstoffkörper bestehen, d.h. es sind keine weiteren Formteile oder andere Komponenten, die nicht aus dem Material des Schaumstoffkörpers bestehen, und optional sogar keine weitere Oberflächenbeschichtung, weder an der Rückseite noch an der Frontseite, an dem Schaumstoffkörper vorgesehen.

Die Aussparung zur Aufnahme des Befestigungselementes kann einen Nestabschnitt und einen Kanalabschnitt, der den Nestabschnitt mit der Außenseite des Schaumstoffkörpers verbindet, aufweisen, wobei der Kanalabschnitt einen geringeren Durchmesser aufweist als der Nestabschnitt. Mit der Außenseite des Schaumstoffkörpers ist in diesem Kontext seine Mantelfläche bezeichnet, welche die Aussparung überspannt, während die Oberfläche der Aussparung Teil der Oberfläche des Schaumstoffkörpers ist, die Oberfläche des Schaumstoffkörpers sich also in die Aussparung hinein erstreckt.

Der Kanalabschnitt kann sich von der Außenseite des Schaumstoffkörpers zu dem Nestabschnitt hin verjüngen und/oder an dem Übergang zum Nestabschnitt eine Einschnürung aufweisen. Dadurch bildet der Übergang zwischen dem Kanalabschnitt und dem Nestabschnitt einen Sitz, gegen den das Befestigungselement zu liegen kommt, wenn es in die Aufnahme eingefügt ist. Der Nestabschnitt grenzt zum Beispiel einen Hohlraum ein, der die Form einer Kugel, eines Ellipsoids oder eines Polyeders aufweist, wobei die Form des Hohlraums der Form des Befestigungselementes oder eines Teils Befestigungselementes entsprechen kann, wie unten erläutert ist.

In verschiedenen Beispielen kann die Abdeckung eine Motorabdeckung, ein Verkleidungsteil, eine Dämmplatte, ein Crash-Pad oder ein Sitzpolster, insbesondere in einem Kraftfahrzeug, bilden. Die Abdeckung ist auf keine bestimmte Anwendung beschränkt. Sie kann die Funktion eines Polsters zum Beispiel zur Dämmung von Vibrationen und Stößen und/oder eine Schall absorbieren Funktion haben. Bei Verwendung eines Integralschaums kann die Abdeckung ein entkopplendes Masse-Feder-System bilden. Die Abdeckung kann im Motorraum, im Innenraum eines Kraftfahrzeuges oder an der Außenseite eines Kraftfahrzeuges, aber beispielsweise auch als Sitzpolster eingesetzt werden.

Die Abdeckung ist Teil eines Abdeckungssystems, wobei das Abdeckungssystem als Gegenstück zu der Aufnahme ein Befestigungselement aufweist. Das Befestigungselement hat einen Kopf, der mit der Aussparung in Eingriff bringbar ist, wobei der Kopf einen Durchmesser hat, der größer ist als ein Durchmesser der Aussparung, um einen festen Sitz des Kopfes in der Aufnahme zu gewährleisten, wenn diese in Eingriff gebracht sind. Dabei ist der Kopf des Befestigungselementes so dimensioniert, dass er in der Aufnahme Material des Schaumstoffkörpers zusammen drückt und verdrängt, sodass sich ein fester kraftschlüssiger und/oder formschlüssiger Sitz ergibt.

Zu diesem Zweck kann der Kopf einen Durchmesser haben, der größer ist als der Durchmesser des Kanalabschnitts. Spezieller kann der Kopf einen Durchmesser haben, der größer ist als ein Durchmesser des Nestabschnitts. In verschiedenen Beispielen kann der Durchmesser des Kopfes in einer Ebene, die parallel zur Mündung des Kanalabschnitts angeordnet ist, die an der Außenseite des Schaumstoffkörpers liegt, größer sein als ein Durchmesser des Nestabschnitts in dieser Ebene, wenn das Befestigungselement in die Aussparung eingefügt ist. Beispielsweise kann der Durchmesser des Kopfes um 1%-50%, insbesondere um ca. 10%, 20% oder 30% größer sein als der Durchmesser des Nestabschnittes. Die genannten Verhältnisse können für die Ebene gelten, in der der Durchmesser des Kopfes am größten ist. Ferner kann der Durchmesser des Kopfes in einer Richtung, die senkrecht zu der Mündung des Kanalabschnitts ist, gleich oder ungefähr gleich groß wie der Durchmesser des Nestabschnitts sein. Dadurch kann der oben beschriebene kraftschlüssige und formschlüssige Sitz des Kopfes des Befestigungselementes innerhalb des Nestabschnitts der Aufnahme erhalten werden.

In verschiedenen Beispielen kann das Befestigungselement einen Halsabschnitt aufweisen, der mit dem Kopf gekoppelt ist, wobei der Halsabschnitt zu dem Kanalabschnitt komplementär oder ungefähr komplementär ist. Insbesondere ist der Halsabschnitt genauso oder ungefähr so lang wie der Kanalabschnitt, um den Kopf des Befestigungselementes vollständig in den Nestabschnitt einfügen zu können. Der Kopf des Befestigungselementes kann eine zu dem Nestabschnitt komplementäre Form haben, beispielsweise die Form einer Kugel, eines Ellipsoids oder eines Polyeders. Eine eckige Kontur des Kopfes und eine entsprechende Kontur des Nestabschnitts können zusätzlich eine Verdrehsicherung erzeugen, wodurch die Abdeckung nach der Verbindung mit dem Befestigungselement ihre Orientierung relativ zu dem Befestigungselement beibehält.

An der Abdeckung können auch mehrere Aussparungen zum Aufnehmen mehrerer Befestigungselemente ausgebildet sein, und an der Gegenfläche, an der die Abdeckung angebracht werden soll, können entsprechend mehrere Befestigungselemente angeordnet sein.

Es wird auch ein Verfahren zur Herstellung einer Abdeckung vorgesehen, wobei ein formgebendes Werkzeug mit einem Platzhalter-Teil bereitgestellt wird, reaktionsfähige Komponenten, insbesondere Polyol und Isocyanat, in das formgebende Werkzeug eingebracht werden und die Komponenten zur Reaktion gebracht werden, um einen Schaumstoffkörper zu bilden, wobei das Werkzeug die Kontur der Abdeckung mit einer Frontseite und einer Rückseite definiert, wobei das Platzhalter-Teil in dem Werkzeug so angeordnet ist, dass in die Rückseite des Schaumstoffkörpers eine Aussparung eingeformt wird, die zur Aufnahme eines Befestigungselementes ausgestaltet ist. Das Platzhalter-Teil kann als separates Teil in das Werkzeug eingelegt werden oder an einer Wand des Werkzeugs angeformt oder befestigt sein. Zur Aufnahme des Befestigungselementes werden keine weiteren Komponente an dem Schaumstoffkörper angebracht oder angeformt. In einigen Beispielen sind an der Rückseite des Schaumstoffkörpers insgesamt keine weiteren Komponenten angebracht oder angeformt. "Weitere Komponenten" sind insbesondere Komponenten, die nicht schon bei der Herstellung des Schaumstoffkörpers in dem Werkzeug gebildet werden und die nicht aus dem Schaummaterial des Schaumstoffkörpers bestehen. Wenn mehrere Aussparungen zur Aufnahme mehrerer Befestigungselemente an der Rückseite des Schaumstoffkörpers ausgebildet werden sollen, können entsprechend mehrere Platzhalter-Teile in dem Werkzeug angeordnet werden.

Eine Abdeckung aus Integralschaum kann insbesondere durch Reaktionsspritzguss hergestellt werden. Dabei kann das zu verschäumende Reaktionsgemisch, wie Polyol und Isocyanat, mit einem Treibmittel in flüssiger Form in ein Formwerkzeug eingebracht werden, wobei das Reaktionsgemisch das Formwerkzeug nach Beendigung der Verschäumungsreaktion vollständig ausfüllt. Der Integralschaum weist als Hauptkomponente beispielsweise Polyurethan auf, kann aber auch aus anderen Kunststoffen, wie Polyethylen, Polypropylen und Polystyrol hergestellt werden. Charakteristisch für Polyurethane ist der leichte Schaumkern mit einer kompakten, verdichteten Haut, der so genannten Integralhaut. Beispiele für Treibmittel sind Wasser, Pentan und/oder HFKWs.

### KURZE BESCHREIBUNG DER ZEICHNUNGEN

Verschiedene Aspekte und Beispiele sind im Folgenden anhand der Figuren erläutert.
- Fig. 1: zeigt eine schematische Darstellung einer Abdeckung gemäß einem Beispiel;
- Fig. 2: zeigt eine schematische Darstellung eines Befestigungselementes gemäß einem Beispiel;
- Fig. 3A bis 3C: zeigen schematische Darstellung verschiedener Beispiele von Befestigungselementen relativ zu verschiedenen Aussparungsformen, gemäß verschiedener Beispiele und
- Fig. 4: zeigt ein Ablaufdiagramm eines Verfahrens gemäß einem Beispiel.

### BESCHREIBUNG VON BEISPIELEN

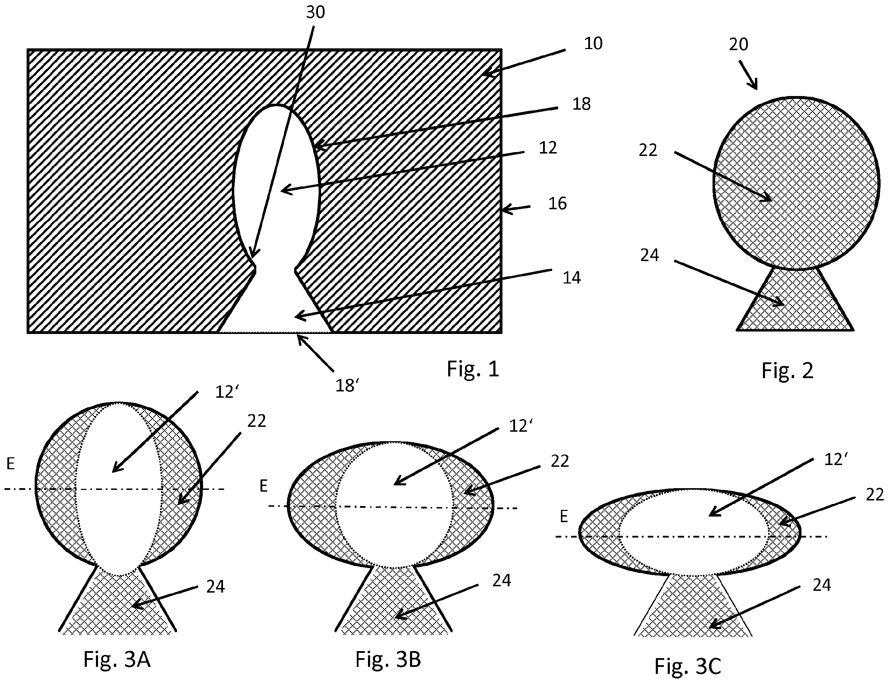

Fig. 1 zeigt eine schematische Darstellung einer Abdeckung gemäß einem Beispiel. Die Abdeckung umfasst einen Schaumstoffkörper 10, der aus einem Integralschaum mit einer Außenhaut oder Integralhaut 16 hergestellt sein kann, die eine höhere Dichte aufweist als der innere Zellkern des Schaumstoffkörpers 10. Die Außenhaut 16 erstreckt sich um den gesamten Umfang des Schaumstoffkörpers 10 und in eine Aussparung 18 hinein, die einen Nestabschnitt 12 und einen Kanalabschnitt 14 aufweist. Die Aussparung 18 dient der Aufnahme eines Befestigungselementes des für die Abdeckung, wobei der Nestabschnitt 12 einen Hohlraum zur Aufnahme eines Kopfes des Befestigungselementes eingrenzt. Der Hohlraum des Nestabschnitts 18 kann beispielsweise die Form einer Kugel, eines Ellipsoids oder eines Polyeders aufweisen, wobei in dem Beispiel der Fig. 1 der Nestabschnitt 16 die Form eines Ellipsoids hat, dessen längere Abmessung senkrecht zur Mündung 18' der Aussparung 18 an der Mantelfläche des Schaumstoffkörpers 10 ist. Die Mantelfläche des Schaumstoffkörpers bezeichnet die Außenseite des Schaumstoffkörpers 10, welche die Aussparung 18 überspannt, während die Oberfläche oder Außenhaut 16 des Schaumstoffkörpers die gesamte Oberfläche des Schaumstoffkörpers bezeichnet, einschließlich der sich in die Aussparung 18 hinein erstreckende Oberfläche des entsprechenden Teils der Außenhaut 16.

Unabhängig von der Form des durch den Nestabschnitt 12 gebildeten Hohlraums kann in verschiedenen Ausgestaltungen der Hohlraum so geformt sein, dass er eine längere Abmessung senkrecht zur Mündung 18' der Aussparung 18 an der Mantelfläche des Schaumstoffkörpers 10 und eine kürzere Abmessung in einer Ebene parallel zur Mündung 18' der Aussparung 18 aufweist, wobei diese Abmessungen auch gleich sein können oder das Verhältnis umgekehrt sein kann, abhängig von der Form des Befestigungselementes.

Der Kanalabschnitt 14 kann zum Beispiel zylindrisch oder konisch geformt sein und erstreckt sich von der Mündung 18' der Aussparung 18 an der Mantelfläche des Schaumstoffkörpers 10 bis zum Nestabschnitt 16. Der Kanalabschnitt 18 hat einen geringeren Durchmesser als der Nestabschnitt 16. In dem gezeigten Beispiel verjüngt sich der Kanalabschnitt 18 von der Außenseite des Schaumstoffkörpers 10 zu dem Nestabschnitt 12 hin und weist an dem Übergang zum Nestabschnitt 12 eine Einschnürung auf. Dadurch kann an dem Übergang zum Nestabschnitt 12 ein Sitz 30 gebildet werden, gegen den der Kopf des Befestigungselementes zu liegen kommt, wenn es in der Aussparung 18 aufgenommen ist.

Fig. 2 zeigt ein Beispiel eines Befestigungselementes 20, mit einem Kopf 22 und einem Halsabschnitt 24, in schematischer Darstellung. Das Befestigungselement kann beispielsweise ein Kunststoff-Spritzgussteil oder ein Elastomerbauteil sein oder aus einer Kombination verschiedener Materialien, einschließlich Metall, Kunststoff und Elastomer, hergestellt sein. Die Form des Halsabschnitts 24 kann komplementär zu den Kanalabschnitt 14 sein. Die Form des Kopfes 22 kann grundsätzlich komplementär zur Form des Nestabschnittes 12 sein, beide können zum Beispiel die Form eines Polyeders oder eines Ellipsoids (einschließlich einer Kugel) haben, wobei der Durchmesser des Kopfes 22 in einer Ebene, die parallel zur Mündung 18' des Kanalabschnitts 18 verläuft, größer ist als ein Durchmesser des Nestabschnitts 12, der in dieser Ebene liegt, wenn das Befestigungselement 20 in die Aussparung 18 eingefügt ist. Der Durchmesser des Kopfes kann z.B. um 1%-50%, insbesondere um ca. 10%, ca. 20% oder ca. 30% größer sein als der Durchmesser des Nestabschnittes. Die Figuren zeigen einen möglichen Größenunterschied, ohne Beschränkung hierauf. Zur Veranschaulichung sind die Größenunterschiede größer als notwendig dargestellt, und die Figuren sind nicht notwendig maßstäblich zu verstehen.

Eine eckige Kontur des Kopfes und eine entsprechende Kontur des Nestabschnitts können zusätzlich eine Verdrehsicherung erzeugen, wodurch die Abdeckung nach der Verbindung mit dem Befestigungselement ihre Orientierung relativ zu dem Befestigungselement beibehält. An der Abdeckung können auch mehrere Aussparungen zum Aufnehmen mehrerer Befestigungselemente ausgebildet sein, und an der Gegenfläche, an der die Abdeckung angebracht werden soll, können entsprechend mehrere Befestigungselemente angeordnet sein.

Durch die konische Ausbildung des Kanalabschnitts 14 und die relativen Abmessungen des Kopfes 22 zu dem Hohlraum des Nestabschnitts 12 kann erreicht werden, dass das Befestigungselement 20 ohne größeren Widerstand in die Aussparung 18 eingefügt werden kann und darin gleichwohl mit festem Sitz, formschlüssig und kraftschlüssig, gehalten wird.

Die Fig. 3A, 3B und 3C zeigen verschiedene Beispiele verschiedener Befestigungselemente relativ zu verschiedenen Nestformen 12'. Das Beispiel der Fig. 3A entspricht den Fig. 1 und 2, wobei der Nestabschnitt 12' die Form eines Ellipsoids und der Kopf 22 des Befestigungselementes 20 die Form einer Kugel hat, wobei der Durchmesser der Kugel in einer Ebene E, die parallel zur Mündung 18' des Kanalabschnitts 18 angeordnet ist, größer ist als ein Durchmesser des Nestabschnitts 12, der in dieser Ebene E liegt. In der zur Mündung 18' senkrechten Richtung sind die Abmessungsmengen des kugelförmigen Kopfes 22 und des Nestabschnitts 12' gleich oder ungefähr gleich. Das Ellipsoid des Nestabschnitts 12' der Fig. 3A ist so angeordnet, dass seine längere Abmessung senkrecht zur Mündung 18' der Aussparung verläuft.

Das Beispiel der Fig. 3B zeigt einen Nestabschnitt 12' in der Form einer Kugel, wobei der Kopf 22 des Befestigungselementes 20 die Form eines Ellipsoids hat, wobei wieder der Durchmesser des Kopfes 22 in einer Ebene E, die parallel zur Mündung 18' des Kanalabschnitts 18 angeordnet ist, größer ist als ein Durchmesser des Nestabschnitts 12', der in dieser Ebene E liegt. In der zur Mündung 18' senkrechten Richtung sind die Abmessungsmengen des kugelförmigen Kopfes 22 und des Nestabschnitts 12' gleich oder ungefähr gleich. Das Ellipsoid des Kopfes 22 der Fig. 3B ist so angeordnet, dass seine längere Abmessung parallel zur Mündung 18' der Aussparung liegt.

Das Beispiel der Fig. 3C zeigt einen Nestabschnitt 12' in der Form eines Ellipsoid, wobei auch der Kopf 22 des Befestigungselementes 20 die Form eines Ellipsoid hat, wobei wieder der Durchmesser des Kopfes 22 in einer Ebene E, die parallel zur Mündung 18' des Kanalabschnitts 18 angeordnet ist, größer ist als ein Durchmesser des Nestabschnitts 12', der in dieser Ebene E liegt. In der zur Mündung 18' senkrechten Richtung sind die Abmessungsmengen des kugelförmigen Kopfes 22 und des Nestabschnitts 12' gleich oder ungefähr gleich. Die Ellipsoide des Kopfes 22 und des Nestabschnitts 12' der Fig. 3C sind beide so angeordnet, dass ihre längeren Abmessungen parallel zur Mündung 18'der Aussparung verlaufen.

Zur Verdeutlichung der Grundsätze der verschiedenen Beispiele ist ein beispielhaftes Größenverhältnis dargestellt, ohne Beschränkung hierauf. Beispielsweise kann der Durchmesser des Kopfes um 1%-50%, insbesondere um ca. 10%, 20% oder 30% größer sein als der entsprechende Durchmesser des Nestabschnittes in der Ebene E, wobei in diesen Beispielen die Ebene E durch den Teil des Kopfes 22 mit der größten Abmessung verläuft. Der Nestabschnitt sollte zur Außenseite des Schaumstoffkörpers einen Mindestabstand von z.B. 5 mm einhalten, um eine Mindestdicke des die Aussparung umgebenden Materials des Schaumstoffkörpers zu gewährleisten.

In jedem der Beispiele wird durch die relativen Abmessungen zwischen Kopf 22 und Nestabschnitt 12, nach dem Einfügen des Befestigungselementes 20 in die Aussparung 18 ein fester Sitz erreicht, der form- und kraftschlüssig sein kann.

Hinsichtlich der Materialien, chemischen und physikalischen Eigenschaften des Schaumstoffkörpers, Abmessungen, Ausgestaltungen und Herstellungsverfahren sowie in Bezug auf mögliche Anwendungen der Abdeckung wird auf die einleitende Beschreibung Bezug genommen.

Beispielsweise kann der Schaumstoffkörper eine mittlere Dichte im Bereich von 100 bis 500 g/dm³ aufweisen. Ferner kann der Schaumstoffkörper eine Stauchhärte im Bereich von 30 bis 350 kPa aufweisen.

Ferner kann die Frontseite des Schaumstoffkörpers eine Oberflächenschicht aufweisen, wie eine Tiefziehfolie, eine Sprühhaut, eine Gießhaut, eine Farbschicht, eine Lackschicht und/oder eine Dekorschicht, die die Frontseite des Schaumstoffkörpers vollständig oder teilweise abdeckt. Ferner kann ein Kunststoffformteil an der Frontseite des Schaumstoffkörpers angebracht oder angeformt sein. Dies ermöglicht die optische und funktionale Gestaltung der Oberfläche der Abdeckung.

Alternativ kann die Abdeckung nur aus dem Schaumstoffkörper bestehen, d.h. es sind keine weiteren Formteile oder andere Komponenten, die nicht aus dem Material des Schaumstoffkörpers bestehen, und optional sogar keine weitere Oberflächenbeschichtung, weder an der Rückseite noch an der Frontseite, an dem Schaumstoffkörper vorgesehen.

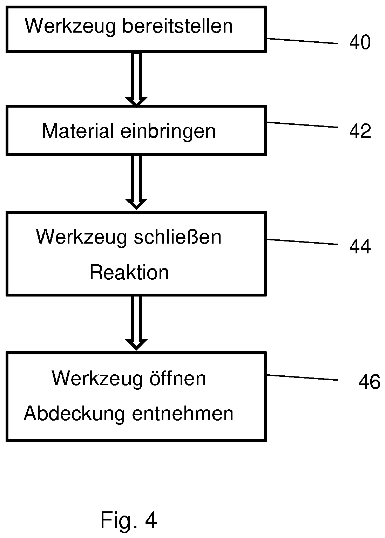

Fig. 4 zeigt ein Ablaufdiagramm eines Verfahrens zur Herstellung einer Abdeckung gemäß einem Beispiel. Das Verfahren verwendet ein formgebendes Werkzeug, das die Kontur der Abdeckung mit ihrer Frontseite und ihrer Rückseite definiert. Zusätzlich verwendet das Verfahren für jede Aussparung, die in der Rückseite der Abdeckung ausgebildet werden soll, ein Platzhalter-Teil, das als separates Teil in das Werkzeug eingelegt oder an einer Innenwand des Werkzeugs angeformt oder befestigt sein kann. Ein oder mehrere Platzhalter-Teile werden an der Innenwand des Werkzeugs dort angeordnet, wo die Aussparungen ausgebildet werden sollen.

Das Verfahren beginnt mit der Bereitstellung des formgebenden Werkzeugs, bei 40. Materialkomponenten, zum Beispiel ein Polyol und Isocyanat und ein Treibmittel, werden, bei 42, in das formgebende Werkzeug eingebracht, das Werkzeug wird geschlossen und die Materialkomponenten werden ausreagiert, bei 44, um den Schaumstoffkörper zu bilden, wobei das Werkzeug die Kontur der Abdeckung mit einer Frontseite und einer Rückseite definiert und wobei das Platzhalter-Teil in dem Werkzeug so angeordnet ist, dass in die Rückseite des Schaumstoffkörpers eine Aussparung dort eingeformt wird, wo eine Aufnahme für ein Befestigungselemente vorgesehen sein soll. Bei 46 wird das Werkzeug geöffnet und die Abdeckung entnommen. Es kann vorgesehen sein, dass zur Aufnahme des Befestigungselementes keine weiteren Komponenten an dem Schaumstoffkörper angebracht oder angeformt werden.

Zur Herstellung einer Abdeckung aus einem Integralschaum kann insbesondere ein Reaktionsspritzguss-Prozess zum Einsatz kommen. Dabei kann ein zu verschäumendes Reaktionsgemisch, wie Polyol und Isocyanat, mit einem Treibmittel in flüssiger Form in ein Formwerkzeug eingebracht werden, wobei das Reaktionsgemisch das Formwerkzeug nach Beendigung der Verschäumungsreaktion vollständig ausfüllt. Der Integralschaum weist als Hauptkomponente beispielsweise Polyurethan auf, kann aber auch aus anderen Kunststoffen hergestellt werden. Charakteristisch für Polyurethane ist der leichte Schaumkern mit einer kompakten, verdichteten Haut, der so genannten Integralhaut. Beispiele für Treibmittel sind Wasser, Pentan und/oder HFKWs.

## Patentansprüche

1. Abdeckungssystem aufweisend eine Abdeckung, die Folgendes aufweist:
einen Schaumstoffkörper, der die Kontur der Abdeckung mit einer Frontseite und einer Rückseite definiert, wobei die Abdeckung nur aus dem Schaumstoffkörper (10) besteht, wobei der Schaumstoffkörper (10) aus einem Integralschaum gebildet ist, dessen Dichte von der Außenseite des Schaumstoffkörpers in Richtung seines Inneren abnimmt, wobei der Schaumstoffkörper (10) einen zelligen Kern und eine zu seinem Rand dichter werdende Außenhaut (16) an seiner Frontseite und seiner Rückseite aufweist; und
ein Befestigungselement (20),
wobei in die Rückseite des Schaumstoffkörpers (10) eine Aussparung (18) eingeformt ist, die einen zur Frontseite hin geschlossenen Hohlraum zur Aufnahme des Befestigungselementes (20) aufweist und derart ausgestaltet ist, dass das Befestigungselement in der Aussparung (18) in direktem Kontakt mit der Oberfläche des Schaumstoffkörpers (10) zu liegen kommt, wobei das Befestigungselement mit der Aussparung (18) in Eingriff bringbar ist,
wobei das Befestigungselement (20) einen Kopf (22) aufweist, der mit der Aussparung (18) in Eingriff bringbar ist, wobei der Kopf (22) einen Durchmesser hat, der größer ist als ein Durchmesser der Aussparung (18).

2. Abdeckungssystem nach Anspruch 1, wobei die Außenhaut (16) sich um den gesamten Umfang des Schaumstoffkörpers (10) und in die Aussparung (18) hinein erstreckt.

3. Abdeckungssystem nach einem der vorangehenden Ansprüche, wobei der Schaumstoffkörper (10) eine mittlere Dichte im Bereich von 100 bis 500 g/dm³ aufweist; und/oder
wobei der Schaumstoffkörper (10) eine Stauchhärte im Bereich von 30 bis 350 kPa aufweist.

4. Abdeckungssystem nach einem der vorangehenden Ansprüche, wobei die Aufnahme des Befestigungselementes (20) nur durch die Aussparung (18) in dem Schaumstoffkörper (10) gebildet ist; und/oder
wobei zur Aufnahme des Befestigungselementes (20) keine weitere Komponente an dem Schaumstoffkörper (10) angebracht oder angeformt ist.

5. Abdeckungssystem nach einem der vorangehenden Ansprüche, die ferner eine Tiefziehfolie, eine Sprühhaut, eine Gießhaut, eine Farbschicht, eine Lackschicht und/oder eine Dekorschicht an der Frontseite des Schaumstoffkörpers aufweist, die die Frontseite des Schaumstoffkörpers vollständig oder teilweise abdeckt; und/oder die ferner ein Kunststoffformteil an der Frontseite des Schaumstoffkörpers (10) aufweist, das an dem Schaumstoffkörper angebracht oder angeformt ist.

6. Abdeckungssystem nach einem der vorangehenden Ansprüche, wobei die Aussparung (18) einen Nestabschnitt (12) und einen Kanalabschnitt (14), der den Nestabschnitt (12) mit der Außenseite des Schaumstoffkörpers (10) verbindet, aufweist und wobei der Kanalabschnitt (14) einen geringeren Durchmesser aufweist als der Nestabschnitt (12).

7. Abdeckungssystem nach Anspruch 6, wobei der Kanalabschnitt (14) sich von der Außenseite des Schaumstoffkörpers (10) zu dem Nestabschnitt (12) hin verjüngt und/oder an dem Übergang zum Nestabschnitt (12) eine Einschnürung aufweist; und/oder
wobei der Nestabschnitt (12) einen Hohlraum eingrenzt, der die Form einer Kugel, eines Ellipsoids oder eines Polyeders aufweist.

8. Abdeckungssystem nach Anspruch 6, wobei der Kopf (22) einen Durchmesser hat, der größer ist als der Durchmesser des Kanalabschnitts; und/oder
wobei der Kopf (22) einen Durchmesser hat, der größer ist als ein Durchmesser des Nestabschnitts (12).

9. Abdeckungssystem nach Anspruch 8, wobei der Durchmesser des Kopfes (22) in einer Ebene, die parallel zur Mündung (18') des Kanalabschnitts (14) angeordnet ist, größer ist als ein Durchmesser des Nestabschnitts (12), der in dieser Ebene liegt; und/oder
wobei der Durchmesser des Kopfes (22) um 1%-50%, insbesondere um ca. 10%, 20% oder 30% größer ist als der Durchmesser des Nestabschnittes (12).

10. Abdeckungssystem nach einem der vorangehenden Ansprüche, wobei das Befestigungselement (20) einen Halsabschnitt (24) aufweist, der mit dem Kopf (22) gekoppelt ist, wobei der Halsabschnitt (24) zu dem Kanalabschnitt (14) komplementär oder ungefähr komplementär ist;
wobei der Halsabschnitt (24) insbesondere mindestens so lang ist wie der Kanalabschnitt; und/oder
wobei der Kopf (22) die Form einer Kugel, eines Ellipsoids oder eines Polyeders aufweist.

11. Verfahren zur Herstellung eines Abdeckungssystems nach einem der vorangehenden Ansprüche, wobei ein formgebendes Werkzeug mit einem Platzhalter-Teil bereitgestellt wird, Materialkomponenten, insbesondere Polyol und Isocyanat, in das formgebende Werkzeug eingebracht und ausreagiert werden, um einen Schaumstoffkörper zu bilden, wobei das Werkzeug die Kontur der Abdeckung mit einer Frontseite und einer Rückseite definiert, wobei das Platzhalter-Teil in dem Werkzeug so angeordnet ist, dass in die Rückseite des Schaumstoffkörpers (10) eine Aussparung (18) eingeformt wird, die einen zur Frontseite hin geschlossenen Hohlraum zur Aufnahme eines Befestigungselementes (20) bildet und zur Aufnahme des Befestigungselementes (20) ausgestaltet ist, wobei das Befestigungselement mit der Aussparung (18) in Eingriff bringbar und nicht in den Schaumstoffkörper eingeformt ist.

## Claims

1. A cover system having a cover, which comprises the following:
a foam body, which defines the contour of the cover with front side and a rear side, wherein the cover consists only of the foam body (10), wherein the foam body (10) is formed from an integral foam, the density of which decreases from the outer side of the foam body in the direction of its interior, wherein the foam body (10) has a cellular core and an outer skin (16), that becomes more dense toward its edge, on a front side and on a rear side thereof; and
a fastening element (20),
wherein a recess (18) is formed into the rear side of the foam body (10), wherein the recess has a cavity that is closed towards the front side for receiving the fastening element (20), and is configured such that the fastening element in the recess (18) comes in direct contact with the surface of the foam body (10), wherein the fastening element is able to be brought into engagement with the recess (18),
wherein the fastening element (20) has a head (22) which is able to be brought into engagement with the recess (18), wherein the head (22) has a diameter which is greater than a diameter of the recess (18).

2. The cover system according to Claim 1, wherein the outer skin (16) extends around the entire circumference of the foam body (10) and into the recess (18).

3. The cover system according to one of the preceding claims, wherein the foam body (10) has a mean density in the range of 100 to 500 g/dm³; and/or
wherein the foam body (10) has a compressive strength in the range of 30 to 350 kPA.

4. The cover system according to one of the preceding claims, wherein the receiving of the fastening element (20) is formed only by the recess (18) in the foam body (10); and/or
wherein no further component is arranged or formed on the foam body (10) for the receiving of the fastening element (20).

5. The cover system according to one of the preceding claims, further comprising a thermoforming film, a spray skin, a casting skin, a colour layer, a lacquer layer and/or a decorative layer on the front side of the foam body, which covers the front side of the foam body entirely or partially; and/or further comprising a plastic moulded part on the front side of the foam body (10), which is arranged or formed on the foam body.

6. The cover system according to one of the preceding claims, wherein the recess (18) comprises a nest portion (12) and a channel portion (14), which connects the nest portion (12) to the outer side of the foam body (10), and wherein the channel portion (14) has a smaller diameter than the nest portion (12).

7. The cover system according to Claim 6, wherein the channel portion (14) tapers from the outer side of the foam body (10) towards the nest position (12) and/or comprises a constriction at the transition to the nest portion (12); and/or
wherein the nest portion (12) delimits a cavity which has the shape of a sphere, an ellipsoid or a polyhedron.

8. The cover system according to Claim 6, wherein the head (22) has a diameter which is greater than the diameter of the channel portion; and/or
wherein the head (22) has a diameter which is greater than a diameter of the nest portion (12).

9. The cover system according to Claim 8, wherein the diameter of the head (22) in a plane which is arranged parallel to the opening (18') of the channel portion (14), is greater than a diameter of the nest portion (12), which lies in this plane; and/or
wherein the diameter of the head (22) is greater by 1%-50%, in particular by ca. 10%, 20% or 30%, than the diameter of the nest portion (12).

10. The cover system according to one of the preceding claims, wherein the fastening element (20) comprises a neck portion (24) which is coupled with the head (22), wherein the neck portion (24) is complementary or approximately complementary to the channel portion (14);
wherein the neck portion (24) in particular is at least as long as the channel portion; and/or
wherein the head (22) has the shape of a sphere, an ellipsoid or a polyhedron.

11. A method for the production of a cover system according to one of the preceding claims, wherein a shaping tool is provided with a placeholder part, material components, in particular polyol and isocyanate, are introduced into the shaping tool and are reacted, in order to form a foam body, wherein the tool defines the contour of the cover with a front side and a rear side, wherein the placeholder part is arranged in the tool so that a recess (18) is formed into the rear side of the foam body (10), which recess forms a cavity, closed towards the front side, for receiving a fastening element (20) and is configured for receiving the fastening element (20), wherein the fastening element is able to be brought into engagement with the recess (18) and is not formed into the foam body.

## Revendications

1. Système de recouvrement comprenant un recouvrement, qui comprend ce qui suit :
un corps en matière alvéolaire qui définit le contour du recouvrement avec une face frontale et une face arrière, dans lequel le recouvrement est constitué uniquement du corps en matière alvéolaire (10), dans lequel le corps en matière alvéolaire (10) est constitué d'une mousse intégrale, dont la densité diminue de la face externe du corps en matière alvéolaire en direction son intérieur, dans lequel le corps en matière alvéolaire (10) comprend un noyau cellulaire et une enveloppe externe (16), qui s'épaissit vers son bord, sur sa face frontale et sa face arrière ; et
un élément de fixation (20),
dans lequel, dans la face arrière du corps en matière alvéolaire (10), est réalisé un évidement (18) qui présente une cavité fermée en direction de la face frontale, pour le logement de l'élément de fixation (20) et qui est conçu de sorte que l'élément de fixation dans l'évidement (18) entre en contact direct avec la surface du corps en matière alvéolaire (10), dans lequel l'élément de fixation peut être emboîté avec l'évidement (18),
dans lequel l'élément de fixation (20) comprend une tête (22) qui peut être emboîtée avec l'évidement (18), dans lequel la tête (22) présente un diamètre qui est supérieur à un diamètre de l'évidement (18).

2. Système de recouvrement selon la revendication 1, dans lequel l'enveloppe externe (16) s'étend autour de toute la circonférence du corps en matière alvéolaire (10) et à l'intérieur de l'évidement (18).

3. Système de recouvrement selon l'une des revendications précédentes, dans lequel le corps en matière alvéolaire (10) présente une densité moyenne de l'ordre de 100 à 500 g/dm³ ; et/ou
dans lequel le corps en matière alvéolaire (10) présente une résistance à la compression de 30 à 350 kPa.

4. Système de recouvrement selon l'une des revendications précédentes, dans lequel le logement de l'élément de fixation (20) est constitué uniquement de l'évidement (18) dans le corps en matière alvéolaire (10) ; et/ou
dans lequel, pour le logement de l'élément de fixation (20), aucun autre composant n'est monté ou moulé sur le corps en matière alvéolaire (10).

5. Système de recouvrement selon l'une des revendications précédentes, qui comprend en outre une feuille emboutie, une pellicule pulvérisée, une pellicule moulée, une couche de couleur, une couche de peinture et/ou une couche de décoration sur la face avant du corps en matière alvéolaire, qui recouvre entièrement ou partiellement la face avant du corps en matière alvéolaire ; et/ou qui comprend en outre une pièce moulée en matière plastique sur la face avant du corps en matière alvéolaire (10), qui est montée ou moulée sur le corps en matière alvéolaire.

6. Système de recouvrement selon l'une des revendications précédentes, dans lequel l'évidement (18) comprend une portion de nid (12) et une portion de canal (14), qui relie la portion de nid (12) avec la face externe du corps en matière alvéolaire (10) et dans lequel la portion de canal (14) présente un diamètre inférieur à celui de la portion de nid (12).

7. Système de recouvrement selon la revendication 6, dans lequel la portion de canal (14) se rétrécit de la face externe du corps en matière alvéolaire (10) vers la portion de nid (12) et/ou présente, au niveau de la transition vers la portion de nid (12), un étranglement ; et/ou
dans lequel la portion de nid (12) délimite une cavité qui présente la forme d'une sphère, d'un ellipsoïde ou d'un polyèdre.

8. Système de recouvrement selon la revendication 6, dans lequel la tête (22) présente un diamètre qui est supérieur au diamètre de la portion de canal ; et/ou
dans lequel la tête (22) présente un diamètre qui est supérieur à un diamètre de la portion de nid (12).

9. Système de recouvrement selon la revendication 8, dans lequel le diamètre de la tête (22), dans un plan parallèle à l'embouchure (18') de la portion de canal (14), est supérieur à un diamètre de la portion de nid (12) qui se trouve dans ce plan ; et/ou
dans lequel le diamètre de la tête (22) est de 1 % à 50 %, plus particulièrement de 10 %, 20 % ou 30 % supérieur au diamètre de la portion de nid (12).

10. Système de recouvrement selon l'une des revendications précédentes, dans lequel l'élément de fixation (20) comprend une portion de col (24) qui est couplée avec la tête (22), dans lequel la portion de col (24) est complémentaire ou approximativement complémentaire à la portion de canal (14) ;
dans lequel la portion de col (24) est plus particulièrement au moins aussi longue que la portion de canal ; et/ou
dans lequel la tête (22) présente la forme d'une sphère, d'un ellipsoïde ou d'un polyèdre.

11. Procédé de fabrication d'un système de recouvrement selon l'une des revendications précédentes, dans lequel un outil de formage avec une pièce de remplacement est mis à disposition, des composants de matériau, plus particulièrement un polyol et un isocyanate, sont introduits dans l'outil de formage et mis en réaction, afin de former un corps en matière alvéolaire, dans lequel l'outil définit le contour du recouvrement avec une face avant et une face arrière, dans lequel la pièce de remplacement est disposée dans l'outil de sorte que, dans la face arrière du corps en matière alvéolaire (10), un évidement (18) est formé, qui constitue une cavité, fermée en direction de la face avant, pour le logement d'un élément de fixation (20) et qui est conçu pour le logement de l'élément de fixation (20), dans lequel l'élément de fixation peut être emboîté avec l'évidement (18) et n'est pas formé dans le corps en matière alvéolaire.
